## Europäisches Patentamt
## European Patent Office
## Office européen des brevets

(19)

(11) Veröffentlichungsnummer: **0 060 219**
**A1**

(12) # EUROPÄISCHE PATENTANMELDUNG

(21) Anmeldenummer: **82810087.5**

(22) Anmeldetag: **22.02.82**

(51) Int. Cl.³: **B 29 C 6/04**
**F 16 L 59/04**

(30) Priorität: **27.02.81 CH 1334/81**
**05.01.82 CH 26/82**

(43) Veröffentlichungstag der Anmeldung:
**15.09.82 Patentblatt 82/37**

(84) Benannte Vertragsstaaten:
**CH DE FR LI SE**

(71) Anmelder: **CIBA-GEIGY AG**
**Patentabteilung Postfach**
**CH-4002 Basel(CH)**

(72) Erfinder: **Bleuel, Felix**
**St. Alban-Rheinweg 84**
**CH-4052 Basel(CH)**

(72) Erfinder: **Bosshard, Christian, Dr.**
**Fasanenstrasse 41**
**CH-4402 Frenkendorf(CH)**

(54) **Flansch mit einer äusseren und einer inneren Umfangs-Dichtfläche und Vorrichtung zum Umgiessen von langgestreckten Körpern.**

(57) Zwei Flansche (2 und 3) bilden zusammen mit dem Aussenrohr (4) eine dichte Giessform zum Ummanteln des inneren Rohres (1). Der untere Flansch (2) ist mit einem Einfüllkanalsystem (80-81-82) und der obere Flansch (3) mit einem Entlüftungs- und Ueberlaufkanal (90) ausgestattet. Die Flansche (2,3) bestehen aus gummielastischem Material mit einer Shore-Härte von 20 bis 80.

Das Kanalsystem (80-81-82) des Flansches (2) umfasst eine radial verlaufende Bohrung (80), die in einen Ringkanal (81) mündet, der stromlinienförmig in einen Durchflussspalt (82) übergeht. Der Durchflussspalt (82) ist so geformt, dass er geschlossen ist, wenn und solange auf die vordere Flansch-stirnfläche (15) ein höherer Druck ausgeübt wird als im Ringkanal (81) herrscht.

Die Flansche (2 und 3) sind im Bereich ihrer Dichtflächen (12 bzw. 11,13) so geformt, dass der Dichtflächen-Pressdruck proportional zu einem auf die Stirnflächen (15 bzw. 16) ausgeübten Druck ansteigt.

./...

Fig. 1

CIBA-GEIGY AG                    37-13309/ 1+2

Basel (Schweiz)


Flansch mit einer äusseren und einer inneren Umfangs-Dichtfläche
und Vorrichtung zum Umgiessen von langgestreckten Körpern.


Die Erfindung betrifft einen Flansch gemäss Oberbegriff von Patentanspruch 1 sowie eine Vorrichtung zum Umgiessen von langgestreckten
Körpern gemäss Oberbegriff von Patentanspruch 18.


Flansche mit äusseren und inneren Dichtflächen, werden zumeist als
Endabschlüsse von Formen zum Umgiessen von laggestreckten Körpern, insbesondere Rohren verwendet. Hierbei ist das zu umgiessende Rohr konzentrisch in einem Rohr grösseren Durchmessers angeordnet und der so zwischen den Rohren gebildete Ringraum zumindest an einem Ende durch einen
Flansch dicht verschlossen. Die Giessmasse wird durch am Umfang des
Aussenrohres angeordnete Eingiessöffnungen oder axiale Flanschbohrungen in die Form eingebracht. Die erstgenannte Art der Einspeisung, welche im folgenden als radial bezeichnet wird, gelangt beispielsweise bei den aus den U.S. Patentschriften 2 730 769, 2 177 221,
2 129 680 und 3 307 590 bekannten Vorrichtungen zur Anwendung. Die zweitgenannte Art, im folgenden als axial bezeichnet, ist z.B. bei der aus
der U.S. Patentschrift 3 941 531 bekannten Vorrichtung verwirklicht.


Die radiale Einspeisung führt naturgemäss zu starken Turbulenzen
und Lufteinschlüssen. Sie ist daher zur Verarbeitung von höher reaktiven Giessharzmassen, insbesondere schäumbaren Kunststoffmassen ungeeignet. (Bei Verarbeitung thermoplastischer Giessmassen sind Lufteinschlüsse nicht so problematisch, da Hohlräume durch Aufschmelzen der
Umgebung nachträglich wieder beseitigt werden können).

- 2 -

Gemäss der U.S. Patentschrift 3 941 531 erfolgt die axiale Einspeisung durch mehrere, im Kreis konzentrisch angeordnete Bohrungen oder Rohrstutzen. Eine ausreichende Turbulenzfreiheit ist dadurch nicht möglich. Somit sind auch dieser Anordnung bei der Verarbeitung von höher reaktiven Giessharzmassen, insbesondere Schaumkunststoffen relativ enge Grenzen gesetzt. Ein weiterer Nachteil der Vorrichtung der U.S. Patentschrift 3 941 531 sind die relativ langen Rohrleitungen, da diese nur schwer oder gar nicht zu reinigen sind.

Ziel der Erfindung ist es, einen Flansch zu schaffen, durch den flüssige Massen, insbesondere schäumbare Kunststoffmassen, so hindurchgeführt werden können, dass an der Ausmündung des Kanalsystems ein weitgehend laminares Fliessen entsteht.

Die gestellte Aufgabe wird im wesentlichen durch die kennzeichnenden Merkmale des Anspruchs 1 gelöst. Die erfindungsgemässe Ausbildung des Kanalsystems hat zudem den Vorteil, dass im Ringkanal ein zusätzlicher Mischeffekt auftritt, welcher bei Mehrkomponentensystemen sehr erwünscht ist.

Spezielle Flanschvarianten sind in den Ansprüchen 2 bis 17 beschrieben. Sie weisen unter anderem die folgenden Vorteile auf: Besonders einfache Möglichkeit der Flanschreinigung (Ansprüche 5 und 8); automatische Wirkung des Flansches als Art Rückschlagventil (Ansprüche 6 und 7); besonders genaue Regulierbarkeit des Durchflusses (Anspruch 9); besonders gute Dichtwirkung (Anspruch 11 und 16) bzw. Verstärkung der Dichtwirkung proportional zum Innendruck (Anspruch 11).

Der erfindungsgemässe Flansch kann überall dort vorteilhaft Verwendung finden, wo es unter anderem darauf ankommt, einen insbesondere ringförmigen Raum auf einfachste Art und Weise zuverlässig abzudichten und gleichzeitig flüssige Medien möglichst turbulenzfrei einzuleiten.

- 3 -

Ein bevorzugtes Anwendungsgebiet sind die bereits beschriebenen Giessformen zum Ummanteln von Röhren mit flüssigen Giessmassen, insbesondere schäumbaren Kunststoffmassen.

Gegenstand der Erfindung ist daher auch die in Anspruch 18 beschriebene Vorrichtung mit den Varianten der Ansprüche 19 bis 24.

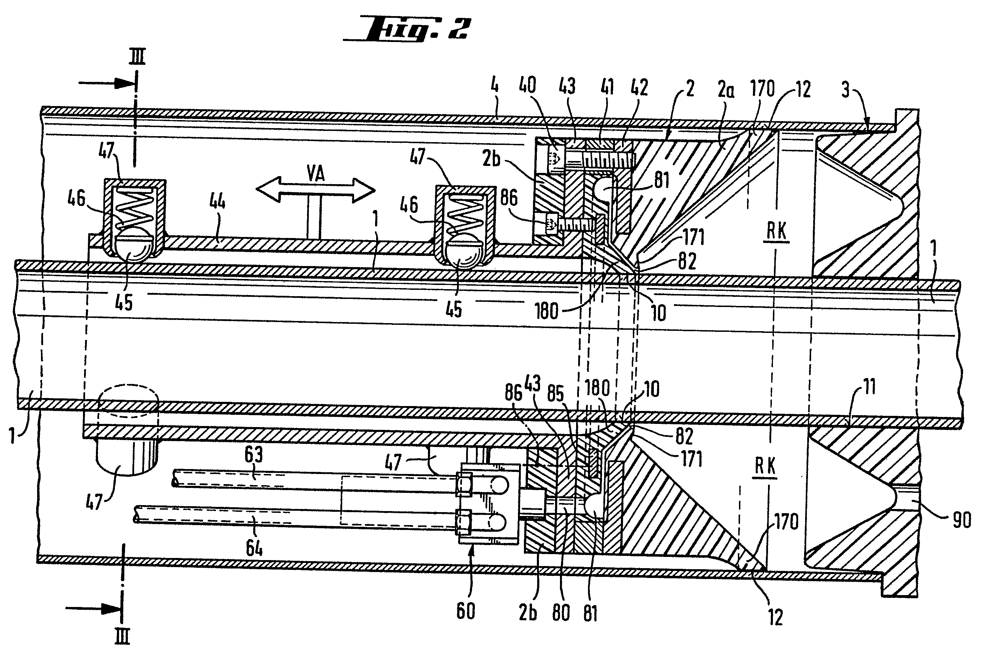

Im folgenden wird die Erfindung anhand der Figuren näher erläutert,
welche die Anwendung verschiedener Ausführungsformen des erfindungsgemässen Flansches in einer Vorrichtung zum Ummanteln von Rohren zeigen. Die Fig. 1 und 2 sind Axialschnitte und Fig. 3 ein Schnitt längs
der Linie III-III in Fig. 2. Einander entsprechende Teile sind in
allen Figuren mit demselben Bezugszeichen versehen.

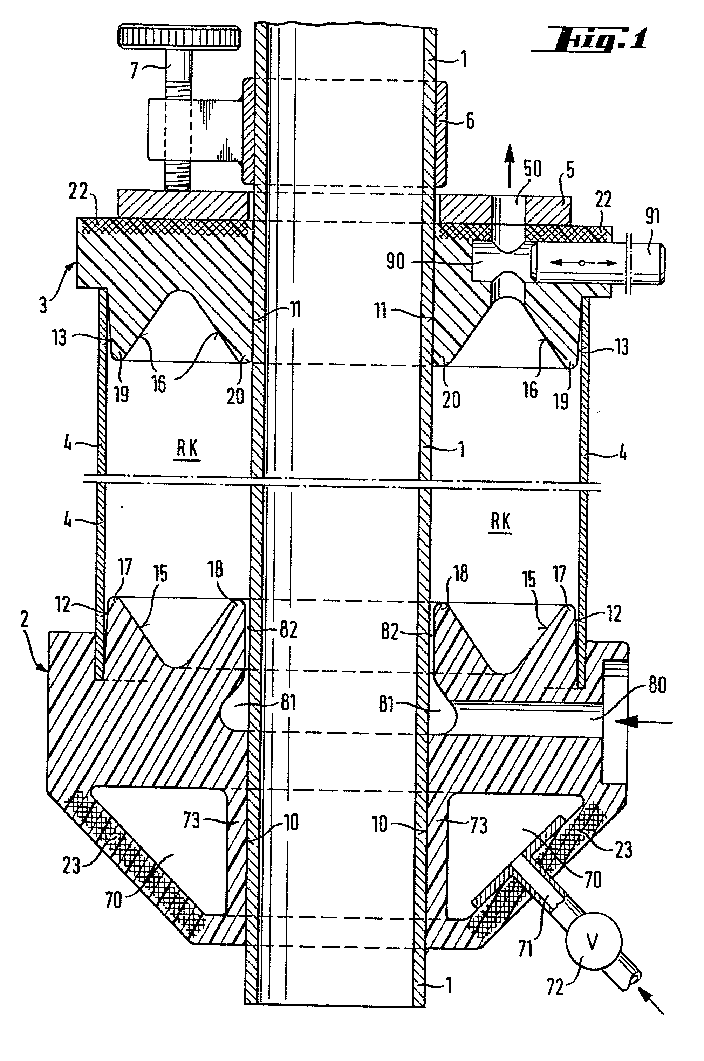

Gemäss Fig. 1 sitzen auf dem mit 1 bezeichneten Rohr im axialen Abstand zwei mit 2 und 3 bezeichnete Flansche mit einem Aussenrohr 4.
Die dargestellte Anordnung wird so aufgebaut, dass z.B. zuerst der
untere Flansch 2 auf das Innenrohr 1 aufgeschoben, anschliessend das
Aussenrohr 4 auf diesen Flansch gesteckt und dann der obere Flansch
3 vom oberen Ende zwischen die beiden Rohre geschoben wird. Nach dem
Aufschieben wird der obere Flansch 3 mittels einem Stützring 5 und
einem Klemmring 6 mit Stellschraube 7 gegen Axialverschiebungen gesichert. Der untere Flansch 2 könnte auf dieselbe Weise fixiert werden. Tatsächlich wird jedoch ein weiter unten ausführlicher beschriebenes pneumatisches System verwendet.

Der untere Flansch 2 ist mit einem Kanalsystem 80-81-82 zum Einbringen
flüssiger Giessmasse ausgestattet und der obere Flansch 3 mit einem
Entlüftungskanal 90. Der Stützring 5 der oberen Axialverschiebungssicherung 5/6/7 ist zur Offenhaltung des Kanals 90 mit einem Loch 50
versehen. Der Kanal 90 ist mittels eines Schiebers 91 verschliessbar.

- 4 -

Die Flansche 2 und 3 sitzen mit inneren Umfangs- bzw. Dichtflächen
10 bzw. 11 dicht am Innenrohr 1. Desgleichen sitzen die Flansche 2
und 3 mit ihren darstellungsgemäss leicht konischen äusseren Umfangsflächen 12 bzw. 13 dicht im Aussenrohr 4. Infolge der gummiartigen
Elastizität des Flanschwerkstoffes sind spezielle Dichtelemente, wie
O-Ringe etc. überflüssig.

Der Flansch 2 weist oberhalb seiner Dichtfläche 10 einen vergrösserten Innendurchmesser auf. Der dadurch zwischen dem Rohr 1 und dem
Flansch gebildete ringförmige Durchflussspalt ist als Teil des Kanalsystems mit 82 bezeichnet. Das gesamte Kanalsystem des Flansches
2 ist gebildet durch eine radial verlaufende Bohrung 80, welche in einen Ringkanal 81 mündet, der seinerseits stromlinienförmig in den
Durchflussspalt 82 übergeht.

Die sich gegenüberliegenden Stirnflächen der Flansche 2 und 3 weisen
jede eine mehr oder weniger V- oder U-förmige Vertiefung 15 bzw. 16
auf. Diese reicht bis an die Ränder, so dass die Randbereiche 17/18
bzw. 19/20 der Flansche eine zusätzliche formbedingte Elastizitätskomponente erhalten. Die Randbereiche 17, 19 und 20 bewirken daher,
dass bei steigendem Innendruck der Pressdruck an den zugehörigen
Dichtflächen 12, 13 bzw. 11 entsprechend ansteigt. Der Randbereich 18
bewirkt, dass der Durchflussspalt 82 durch den Innendruck automatisch
geschlossen wird, wenn dieser Druck oder die Differenz zwischen
diesem Druck und einem von aussen durch den Kanal 80 applizierten
Druck einen bestimmten Wert übersteigt.

Der Flansch 2 der Fig. 1 ist im Bereich seiner Dichtfläche 10 mit
einem Ringkanal 70 ausgestattet, welcher über einen Anschluss 71
und ein Ventil 72 z.B. an eine Pressluftquelle (nicht dargestellt)
angeschlossen ist. Bei Oeffnen des Ventils 72 wird der Ringkanal 70
unter Druck gesetzt und dadurch die Kanalwand 73 und damit der entsprechende Teil der Dichtfläche 10 fester gegen das Rohr 4 gepresst.

- 5 -

Dadurch wird nicht nur die Dichtwirkung erhöht sondern vor allem
eine zuverlässige Fixierung des Flansches 2 gegen unerwünschte
Axialverschiebungen erreicht. Diese einfache und zuverlässige Art
der Axialfixierung könnte auch beim oberen Flansch 3 anstelle der Anordnung mit den Ringen 5, 6 und der Stellschraube 7 angewandt werden.

Die Flansche 2 und 3 sind aus einem weichmacherhaltigen Kunststoff, aus Silkonkautschuk oder dergleichen flexiblem Material gegossen. Gewisse Bereiche der Flansche können z.B. durch eine
härtere Giesschicht, durch die Einlage einer Platte oder durch Faser-
oder Gewebeeinlagen verstärkt sein. So ist beispielsweise beim Flansch
3 eine Verstärkung 22 der hinteren Stirnfläche angedeutet. Diese würde
den Verstärkungsring 5 entbehrlich machen. Die Verstärkungsschicht 22
reicht nicht bis zum inneren Durchmesser. Hierdurch bleibt die gesamte Kontakt- bzw. Dichtfläche 11 weich. Die guten Aufschiebe- und
Abdichtungseigenschaften bleiben vollständig erhalten. Gleichzeitig
wird die Rohrzentrierung verbessert. Der untere Flansch 2 weist im
Bereich des Ringkanals 70 eine ähnliche Verstärkung 23 .auf. Hierdurch
kann die Aussenwand des Kanals 70 relativ dünn gehalten werden.

Mittels der in Fig. 1 dargestellten Anordnung erfolgt das Ummanteln
des Rohres 1 wie folgt:

Durch das Kanalsystem 80-81-82 des unteren Flansches 2 wird aus einem
Vorratsbehälter oder einem Mischer (nicht dargestellt) z.B. fliessfähige Schaumstoffmasse in ungeschäumtem Zustand eingefüllt. Die Masse
gelangt durch den Ringspalt 82 in den Rohrzwischenraum RK (Ringkammer).
Die Schaumstoffmasse steigt auf, wobei die Luft bei offenem Schieber
91 durch den Kanal 90 des oberen Flansches 3 entweicht.

Wenn eine vorbestimmte Menge eingefüllt ist, wird die Zufuhr gestoppt.

- 6 -

Die Masse beginnt zu schäumen und dehnt sich aus. Wenn Schaummasse durch den Kanal 90 des oberen Flansches 3 austritt, wird der Schieber 91 geschlossen. Dadurch steigt der Druck in dem durch die beiden Rohre 1 und 4 und Flansche 2 und 3 gebildeten Raum. Bei "physikalisch getriebenen" Schäumen erreicht der Druck etwa 2 bis 5 bar; bei "chemisch getriebenen" Schäumen nur einen Bruchteil dieses Wertes. Durch den Druckanstieg wird infolge der Formgebung und Elastizität der Teil 18 des unteren Flansches auf das Innenrohr 1 gepresst. Dadurch schliesst sich der Ringspalt 82. Gleichzeitig werden bei steigendem Schaumdruck der äussere Rand 17 des unteren Flansches 2 verstärkt auf das Aussenrohr 4 und die Ränder 19 und 20 des oberen Flansches 3 verstärkt auf die beiden Rohre 1 und 4 gepresst. Infolge der Gummielastizität und speziellen Formgebung erfüllt somit der untere Flansch automatisch eine Art Rückschlagventil-Funktion und erhöht sich bei beiden Flanschen proportional zum Druckanstieg die Rohrfixierung und Dichtwirkung.

Nachdem der Schaumstoff sich ausreichend verfestigt hat (je nach Produkt durch Warmhärtung oder Erstarren infolge Abkühlung) können die beiden Flansche 3 und 2 nach Entfernen des Stützmechanismus 5/6/7 bzw. Entlüften des Ringkanals 70 abgezogen werden. Das Aussenrohr 2 verbleibt zumeist als äussere Schutzschicht auf der Schaumstoffummantelung.

Wie die vorstehenden Ausführungen zeigen, sind die Anforderungen, welche an den die Einfüllarmatur der Giessform bildenden Flansch 2 gestellt werden, wesentlich höher als diejenigen, welche an den/die Ueberlauf- bzw. Entlüftungsarmatur bildenden Flansch 3 gestellt werden. Dies manifestiert sich vor allem in der Ausbildung des Kanalsystems. Im Ueberlauf- bzw. Entlüftungsflansch 2 genügt ein einfach axialer Kanal 90. Im Einfüllflansch 2 ist die Ausbildung des Kanalsystems von ausschlaggebender Bedeutung.

Der Einfüllflansch 2 der in Fig. 1 dargestellten Anordnung zeichnet sich unter anderem dadurch aus, dass infolge der besonderen Ausbildung seines Ringspaltes 82 der Füllvorgang absolut gleichmässig, im wesentlichen laminar abläuft und der Ringspalt 82 sich beim Ansteigen des Giessrauminnendruckes auf einen bestimmten Wert automatisch schliesst.

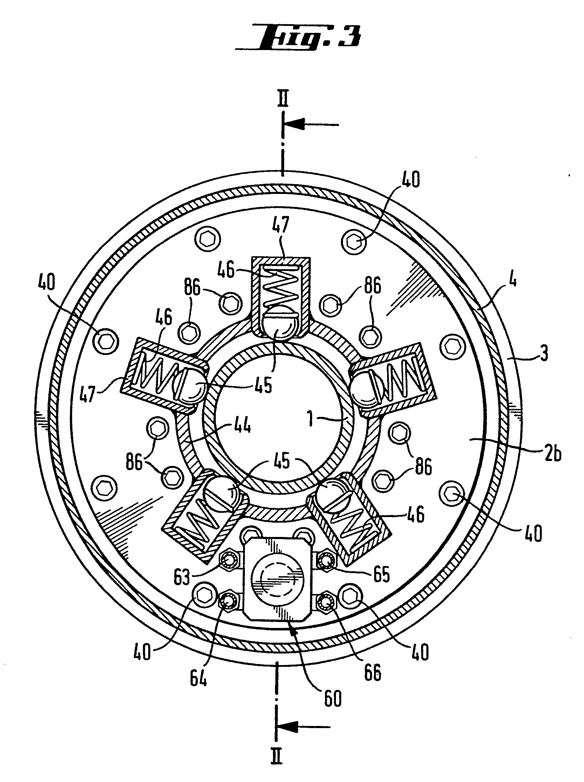

In den Fig. 2 und 3 ist eine Anordnung mit einem weiter perfektionierten Einfüllflansch 2 dargestellt. Als Entlüftungsflansch 3 kann z.B. ein gleicher wie in Fig. 1 verwendet werden. Er ist daher nurmehr durch seine vordere Kontur angedeutet.

In den Fig. 2 und 3 sind in Uebereinstimmung mit Fig. 1 das zu ummantelnde Rohr mit 1 und das Aussenrohr mit 4 bezeichnet.

Der Flansch 2 ist zweiteilig ausgebildet. Die beiden Teile 2a und 2b sind mittels Schrauben 40 unter Zwischenlage eines Distanzringes 41 aus hartem Werkstoff, insbesondere Metall lösbar zusammengespannt. In beide Flanschteile 2a und 2b ist je ein relativ flacher Metallring 42, bzw. 43 eingebettet. Die Schrauben 40 sind durch Löcher des hinteren Flanschteils 2b und darin eingebetteten Metallringes 43 sowie durch Bohrungen des Distanzringes 41 mit ihren vorderen Enden in Gewindelöcher des in den vorderen Flanschteil 2a eingebetteten Metallringes 42 eingeschraubt.

Der Metallring 43 bildet darstellungsgemäss einen flanschartigen Teil eines nach aussen weisenden Rohrstutzens 44. Dieser Rohrstutzen ist als Zentrierführung für den Flansch 2 ausgebildet. Hierzu sind freilaufende Kugeln 45 vorgesehen. Diese sitzen in nach aussen ragenden Töpfen 47, die nach innen offen sind. Die Kugeln 45 werden durch Druckfedern 46 nach innen (auf das Rohr 1) gedrückt. Die Kugeln sind je paarweise in achsparallelen Spuren angeordnet und die Kugelpaare, darstellungsgemäss fünf (Fig. 3), gleichmässig am Umfang verteilt.

- 8 -

Die Dichtflächen 10 und 12 des Flansches 2 sind durch integrale steil
nach vorne ragende Ringlippen 170 bzw. 180 gebildet. Die die äussere
Dichtfläche 10 bildende Ringlippe 170 ist Teil der vorderen Flanschhälfte 2a, die andere (180) Teil der hinteren Flanschhälfte 2b.

Die Ringlippen 170 und 180 stehen im undeformierten Zustand (nicht
dargestellt) je nach Flanschgrösse bis zu 3o mm und mehr nach aussen
bzw. innen vor. Dadurch kann auch bei grossen Durchmessertoleranzen
der Rohre 1 und 4 eine stets einwandfreie Abdichtung zwischen Flansch
und Rohr erreicht werden. Dies ist insbesondere wichtig, wenn z.B.
das Innenrohr aus mehreren Rohrstücken zusammengeschweisst ist bzw.
wird, damit der Flansch auch über die Schweissraupen geschoben werden
kann.
Der Ringkanal 81 und der Durchflussspalt 82 sind in der Trennfuge
der beiden Flanschteile 2a und 2b ausgespart. Dies hat unter anderem
den Vorteil, dass das Kanalsystem nach Gebrauch des Flansches sehr
leicht gereinigt werden kann. Der vordere Flanschteil kann an der
Mündung des Durchflussspaltes mit einer feinen Ringlippe 171 versehen
sein, wodurch ein zusätzlicher Rückschlagventil-Effekt erzielt wird.

Die unmittelbar an den Ringkanal 81 anschliessende Begrenzungswand des Durchflussspaltes 82 ist durch eine steife Einlage, insbesondere einen flachen Metallring 85 hinterlegt. Auf diesen Ring 85
wirken die vorderen Enden von Quetschschrauben 86, die durch Gewinde des Stahlringes 43 geschraubt und deren Köpfe von hinten zugänglich sind. Die Quetschschrauben 86, darstellungsgemäss zehn
(Fig. 3), sind gleichmässig am Umfang des Ringes 85 verteilt. Durch
entsprechende Einstellung dieser Schrauben kann die Weite des
Durchflussspaltes 82 längs seines Umfanges selektiv eingestellt werden. Durch entsprechende Einstellung (empirisch ermittelt) kann ein
gleichmässiger Durchfluss über den gesamten Spaltumfang erzielt
werden.

- 9 -

In den Fig. 2 und 3 ist mit 60 ein Hochdruck-Misch- und Dosierkopf für ein flüssiges Mehrkomponenten-Giessharzsystem bezeichnet. Dieser ist direkt am Flansch 2 bzw. dessen hinteren Teil 2b befestigt, wobei seine Abgabedüse dicht mit dem Einfüllkanal 80 verbunden ist. Die Komponentenzu- und ableitungen sind mit 63 und 65 bzw. 64 und 66 bezeichnet und an nicht dargestellte Dosierpumpen angeschlossen.

Die aus dem Rohr 44 mit den Führungskugeln 45 bestehende Führungs- und Zentriervorrichtung kann auch als Verschiebekraft-Einleitungsvorrichtung verwendet werden. Mittels dieser Vorrichtung kann eine regulierbare Kraft in beiden Verschiebungsrichtungen auf den Flansch 2 ausgeübt werden. Die Vorrichtung (und damit der Flansch) kann an einen programmierbaren motorischen-, insbesondere hydraulischen pneumatischen oder dgl. Antrieb angeschlossen werden. Der Antrieb ist von konventioneller Bauart und daher nur durch einen Doppelpfeil VA symbolisiert. Vorzugsweise ist der Antrieb VA bezüglich seiner Ausziehgeschwindigkeit in Abhängigkeit von der zeitlich eingespeisten Menge der Giessmasse so gesteuert, dass der Druck in der Ringkammer RK eine bestimmte Grösse nicht überschreitet. Die Steuerung kann auch so angelegt sein, dass der Antrieb VA bezüglich seiner Ausziehgeschwindigkeit und die zeitlich eingespeiste Menge Giessharzmasse so gesteuert sind, dass in jedem Zeitintervall die durch den Auszug bewirkte zeitliche Volumenvergrösserung der Ringkammer RK zumindest angenähert mit dem Volumen der eingespeisten Giessharzmasse übereinstimmt. Derart progarammierbare Steuerungen sind allgemein bekannt, so dass auf ihre Darstellung und ausführlichere Beschreibung verzichtet werden kann.

Die in den Fig. 2 und 3 dargestellte Anordnung kann in derselben Weise betrieben werden, wie diejenige der Fig. 1, wobei beide Flansche während des gesamten Giess- und eventuell anschliessenden Aufschäumens in der zu Beginn des Giessvorganges festgelegten Lage fixiert bleiben. Für die Verarbeitung von schnell reagierenden bzw. schnell erstarrenden

- 10 -

Giessmassen ist diese "stationäre" Art, insbesondere bei längeren Giessformen ungeeignet, da die Giessmasse bereits auf dem Weg vom Einfüllflansch 2 zum Entlüftungsflansch 3 geliert oder erstarrt und dadurch eine komplette gleichmässige Füllung verunmöglicht wird.

Die Anordnung der Fig. 2 und 3 wird daher in der Regel mit "mobilem" Einfüllflansch 2 betrieben. Zu Beginn des Einfüllvorganges befindet sich der Einfüllflansch 2 mit dem Mischkopf 60 in unmittelbarer Nähe des Entlüftungsflansches 3. Er ist auch bereits mit dem Antrieb VA gekuppelt. Die Rohre 1 und 4 sind mittels nicht dargestellter Haltevorrichtungen zentriert positioniert; das Innenrohr mit seinen vorstehenden Enden . Diese Stellung ist in Fig. 2 dargestellt. Nun wird der Mischkopf 60 bzw. die diesen speisenden Dosierpumpen (nicht dargestellt) in Betrieb gesetzt und Giessharzgemisch durch das Kanalsystem 80-81-82 in den durch die beiden Flansche 2 und 3 und beiden Rohre 1 und 4 begrenzten Raum RK eingespeist. Sobald die Giessmasse den Entlüftungsflansch 3 erreicht und durch dessen Entlüftungskanal 90 auszuströmen beginnt, wird dieser geschlossen und es beginnt die Phase des Zurückziehens oder freien oder gebremsten Zurückschiebens des Einfüllflansches 2.

Ob der Flansch 2 dem freien Spiel der Kräfte überlassen oder durch den Antrieb VA gebremst oder aktiv zurückgezogen wird, hängt von der gewählten Arbeitsweise bzw. der Art der Giessmasse und dem gewünschten Ergebnis ab. Die Anordnung als solche lässt vorteilhafterweise alle Möglichkeiten offen.

Wird z.B. als Giessmasse ein Epoxidharz-Schaumsystem mit einem physikalischen Treibmittel verwendet, welches beim Aufschäumen bekanntlich Drucke von 2 bis 6 bar erzeugt, dann wird in der Regel gebremst. Die Bremskraft bzw. Geschwindigkeit des Antriebes VA kann u.a. in Abhängigkeit von der zeitlich eingespeisten Menge und dem Ablauf des Aufschäumvorganges so gesteuert werden, dass in der Giessform der

- 11 -

Druck zumindest angenähert auf einem bestimmten Wert konstant bleibt. Dadurch kann im Rahmen des Möglichen jede gewünschte Schaumdichte erzielt werden.

Am Ende des Verschiebeweges wird der Eingiessflansch 2 blockiert. Falls z.B. ein Schaumsystem verwendet wurde und mit höherem Schaumdruck gearbeitet wird, wird nach Abstellen des Zuflusses der Ringspalt 82 durch den Innendruck automatisch geschlossen.

Nach dem Erstarren bzw. Aushärten der Giessmasse werden die Flansche 2 und 3 abgezogen und gereinigt. Sie sind praktisch beliebig oft verwendbar.

Es können aber auch längere, aus beliebig vielen Rohrstücken zusammengesetzte Rohrstrecken ummantelt werden. Hierzu wird das erste Rohrstück wie vorstehend beschrieben nicht ganz bis zum Ende ummantelt. Anschliessend wird der hintere Teil 2a des Flansches 2 abgezogen, der Mischkopf 60 abgehängt, die Trennfugen der beiden Flanschteile 2a und 2b gereinigt, ein weiteres Rohrstück an das bereits ummantelte Rohrstück angeschweisst, der Flanschteil 2 b über das neue Rohrstück aufgeschoben und mit dem vorderen Flanschteil 2a zusammengeschraubt, der Mischkopf 60 wieder an den Flanschteil 2a angeschlossen, der Flansch 2 mit dem Antrieb VA gekuppelt und schliesslich auch an das Aussenrohr 4 ein weiteres Rohrstück angeschweisst. Die Anordnung ist damit für die Ummantelung des neuen Rohrstückes bereit.

Damit ist eine quasi-kontinuierliche Ummantelung längerer Rohrleitungen möglich. Schweissnähte sind problemlos, da der Flansch infolge seiner gummielastischen Eigenschaften leicht über solche Schweissnähte gleitet ohne dass dabei seine Dichtwirkung unterbrochen wird.

Bei der sukzessiven Ummantelung längerer Rohrstrecken wird nur für die Ummantelung des ersten Rohrstückes ein Entlüftungsflansch (3)verwendet.Nachher ist zwischen dem Einfüllflansch (2)und dem vorher ge-

- 12 -

gossenen Mantelstück kein Raum, der entlüftet werden müsste. Insbesondere in diesem Fall kann daher anstelle des gummielastischen Entlüftungsflansches 3 auch irgend ein anderer vorderer Abschluss mit einem verschliessbaren Entlüftungsloch gewählt werden. Beispielsweise können die beiden Rohre am Anfang durch eine angeschweisste Stirnplatte mit einem verschliessbaren Loch verschlossen sein. Diese Variante ergibt einen sehr robusten Rohranfang und ist daher besonders zweckmässig, wenn das Rohr unmittelbar nach dem Ummanteln sukzessive verlegt wird.

Die Flansche (2 und 3) sind unter Einbettung der Metallteile und anderen Verstärkungseinlagen als ganzes aus einem einheitlichen Werkstoff gegossen. Die Härte des gegossenen Werkstoffes liegt zwischen Shore A (DIN 53505) 25 und 30. In Sonderfällen können aber auch wesentlich weichere oder wesentlich härtere Werkstoffe zweckmässig sein (bis Shore A 20 bzw. Shore A 80).

Besonders zweckmässig ist die Wahl solcher bekannter gummielastischer Werkstoffe, welche, wie z.B. Silikonkautschuk, die Eigenschaft haben, dass, wenn ein flüssiger Schaumkunststoff in Kontakt mit ihnen erstarrt, sie sich leicht von diesem trennen lassen. Dies hat den grossen Vorteil, dass bei Verwendung Flansche als Teil einer Umgiessvorrichtung für Rohre oder dergleichen, auf ein Trennmittel verzichtet werden kann. Hierdurch wird ein zusätzlicher zeitraubender Arbeitsgang eingespart und ausserdem die Arbeitshygiene verbessert.

Als Flanschwerkstoff sind besonders geeignet: Siliconkautschuk der Firma Wacker-Chemie GmbH, München BRD, mit den Typenbezeichnungen RTV-ME 622 und RTV-ME 628, Silikonkautschuk der Firma Coltene AG, Altstätten/Schweiz mit den Produktebezeichnungen Coltoflex® sowie die unter dem Markennamen Ureol® bekannten Werkzeugharze Ureol 6402-6402 B (Shore Härte 75) und Ureol 6409 A - 6409 B (Shore-Härte 30) von CIBA-GEIGY .

- 13 -

Die Erfindung ist nicht auf die dargestellten und beschriebenen
Ausführungsformen eingeschränkt. Wesentlich ist, dass die Armatur
aus gummielastischem Werkstoff besteht und das Kanalsystem einen
langen inneren Sammelkanal (81) aufweist, der auslaufseitig in einen
relativ engen, vorzugsweise selbstschliessenden Spalt (82) übergeht.
Sammelkanal und Spalt müssen nicht unbedingt ringförmig in sich geschlossen sein. Die Armatur muss auch keine Bohrung zur Aufnahme eines
inneren Rohres (1) aufweisen. Sie muss selbstverständlich auch nicht
kreisrund sein, sondern kann eine beliebig andere, beispielsweise
rechteckige Gestalt besitzen. Sie kann auch relativ schmal sein,
wobei der Sammelkanal und Durchflussspalt sich über den grössten Teil
der Länge erstrecken. Die Armatur kann praktisch an jede beliebige
Giessformöffnung angepasst und als stationärer oder mobiler Verschluss verwendet werden, wobei ihr Kanalsystem dank seiner besonderen
Ausbildung ein weitgehend laminares Einfliessen in die Giessform
gewährleistet.

- 14 -

Patentansprüche
_____

1.Flansch aus gummielastischem Material mit einer äusseren und einer
inneren Umfangs-Dichtfläche, gekennzeichnet durch ein Kanalsystem (80-81-82), das, wenn der Flansch zwischen zwei konzentrischen
Rohren sitzt, die Räume auf den beiden verschiedenen Seiten der Dichtflächen miteinander verbindet, wobei das Kanalsystem über einen ringförmigen Verteilkanal (81) mit anschliessendem Durchflussspalt (82)· an
der vorderen Flanschstirnfläche ausmündet.

2. Flansch gemäss Anspruch 1, dadurch gekennzeichnet, dass das gummielastische Material von an seiner Oberfläche erstarrenden Schaum-
Kunststoffen leicht trennbar ist.

3. Flansch gemäss Anspruch 2, dadurch gekennzeichnet, dass das elastische Material bzw. seine Oberfläche klebresistent ist.

4. Flansch gemäss Anspruch 2 oder 3, dadurch gekennzeichnet, dass
das elastische Material Silikonkautschuk ist.

5. Flansch gemäss Anspruch 1, dadurch gekennzeichnet, dass der Durchflussspalt (82) durch eine Erweiterung der lichten Flanschinnenweite im Bereich zwischen der inneren Dichtfläche (10) und der Stirnfläche gebildet ist.

6. Flansch gemäss einem der vorangehenden Ansprüche, dadurch gekennzeichnet, dass er so geformt ist, dass der Durchflussspalt (82) infolge der Form von zumindest einem der ihn bildenden Flanschwandbereiche und der Elastizität des Flanschmaterials geschlossen ist und
nur dann geöffnet wird, wenn und solange der Druck eines via Ringkanal (81) eingespeisten Druckmediums den Gegendruck eines auf die
vordere Flanschstirnfläche wirkenden Mediums übersteigt.

7. Flansch gemäss einem der Ansprüche 1 bis 5, dadurch gekennzeichnet, dass er so geformt ist, dass der Durchflussspalt (82) infolge der Form von zumindest einem der ihn bildenden Flanschwandbereiche und der Elastizität des Flanschmaterials geschlossen ist, wenn und solange der Druck eines auf die vordere Flanschstirnfläche wirkenden Druckmediums den Druck eines via Ringkanal (81) eingespeisten Druckmediums um einen bestimmten Wert übersteigt.

8. Flansch gemäss einem der vorangehenden Ansprüche, dadurch gekennzeichnet, dass er zweiteilig (2a, 2b) ausgebildet ist und der Durchflusspalt (82) und vorzugsweise auch der Ringkanal (81) in der Trennfuge ausgespart sind.

9. Flansch gemäss einem der Ansprüche 5 bis 8, dadurch gekennzeichnet, dass zumindest eine Wand des Durchflussspalts (82) über einen begrenzten, vorzugsweise unmittelbar an den Ringkanal (81) anschliessenden Teil der Durchflusslänge mit einer steifen Einlage, vorzugsweise einem Metallring (85) hinterlegt ist, und dass auf diese Einlage die vorderen Enden von Quetschschrauben (86) wirken, deren Köpfe von aussen zugänglich sind und welche Quetschschrauben durch Gewinde geschraubt sind, die in ein im Flanschmaterial eingebettetes Teil (43) aus hartem Material, insbesondere Metall geschnitten sind.

10. Flansch gemäss Anspruch 9, dadurch gekennzeichnet, dass der mit der steifen Einlage (85) hinterlegte Teil des Durchflussspaltes (82) im wesentlichen in einer Radialebene verläuft und die Quetschschrauben (86) achsparallel angeordnet und an der Flanschhinterseite zugänglich sind.

11. Flansch gemäss einem der vorangehenden Ansprüche, dadurch gekennzeichnet, dass er im Bereich seiner Dichtflächen (10, 12 bzw. 11, 13) so geformt ist, dass infolge dieser Form und der Elastizität des Flanschmaterials der Dichtflächen-Pressdruck proportional zu einem von einem Pressmedium auf die vordere Flanschstirnfläche ausgeübten Druck ansteigt.

12. Flansch gemäss Anspruch 11, dadurch gekennzeichnet, dass die vordere Stirnfläche eine im wesentlichen U- oder V-förmige, koaxial umlaufende Vertiefung (15 bzw. 16) aufweist, die sich bis nahe an die beiden Ränder erstreckt, und dass die Dichtflächen (10 bzw. 11) an diesen Rändern liegen.

13. Flansch gemäss Anspruch 11, dadurch gekennzeichnet, dass die äussere Dichtfläche (12) durch eine integrale, steil nach vorne und aussen vorstehende Ringlippe (170) gebildet ist.

14. Flansch gemäss Anspruch 11 oder 13, dadurch gekennzeichnet, dass die innere Dichtfläche (10) durch eine integrale, steil nach vorne und schräg nach innen vorstehende Ringlippe (180) gebildet ist.

15. Flansch gemäss Anspruch 13 oder 14, dadurch gekennzeichnet, dass die Ringlippen (170,180) in undeformiertem Zustand bis zu 30 mm und mehr nach aussen bzw. innen vorstehen.

16. Flansch gemäss einem der vorangehenden Ansprüche, dadurch gekennzeichnet, dass er nahe der äusseren und/oder der inneren Dichtfläche (10) einen umlaufenden Ringkanal (70) aufweist, der an eine Druckmediumquelle anschliessbar ist.

17. Flansch gemäss einem der vorangehenden Ansprüche, dadurch gekennzeichnet, dass er partiell, insbesondere im Bereich der hinteren Stirnfläche eine versteifende Einlage (22) aufweist.

18. Vorrichtung zum Umgiessen, insbesondere Umschäumen von langgestreckten Körpern, wobei der zu umgiessende Körper koaxial in einem Rohr positoniert ist, welches zusammen mit zwei Endabschlüssen eine Ringkammer bildet, in die die flüssige Giessmasse durch einen der beiden Endabschlüsse eingebracht werden kann, dadurch gekennzeichnet, dass zumindest der Endabschluss zum Einfüllen der Giessmasse durch einen Flansch (2) gemäss einem oder mehreren der vorangehenden Ansprüche gebildet ist.

19. Vorrichtung gemäss Anspruch 18, dadurch gekennzeichnet, dass einer der beiden Flansche, insbesondere derjenige mit dem Kanalsystem (80-81-82) zum Einbringen der flüssigen Giessmasse verschiebbar zwischen dem langgestreckten Körper (Rohr 1) und dem Aussenrohr (4) sitzt und mit seiner hinteren Stirnfläche an eine Verschiebekraft-Einleitungsvorrichtung (44) angeschlossen ist, mittels derer eine regulierbare Kraft in beiden Verschiebungsrichtungen auf den Flansch ausübbar ist.

20. Vorrichtung gemäss Anspruch 19, dadurch gekennzeichnet, dass die Verschiebekraft-Einleitungsvorrichtung (44) an einen programmierbaren motorischen-, insbesondere hydraulischen-, pneumatischen oder dgl. Antrieb (VA) angeschlossen ist.

21. Vorrichtung gemäss Anspruch 20, dadurch gekennzeichnet, dass der Antrieb (VA) bezüglich seiner Ausziehgeschwindigkeit in Abhängigkeit von der zeitlich eingespeisten Menge der Giessmasse so gesteuert ist, dass der Druck in der Ringkammer (RK) eine bestimmte Grösse nicht überschreitet.

22. Vorrichtung gemäss Anspruch 20, dadurch gekennzeichnet, dass der Antrieb (VA) bezüglich seiner Ausziehgeschwindigkeit und die zeitlich eingespeiste Menge Giessharzmasse so gesteuert sind, dass in jedem Zeitintervall die durch den Auszug bewirkte zeitliche Volumenvergrösserung der Ringkammer (RK) zumindest angenähert mit dem Volumen der eingespeisten Giessharzmasse übereinstimmt.

23. Vorrichtung gemäss Anspruch 19, dadurch gekennzeichnet, dass die Vorschiebekraft-Einleitungsvorrichtung (44) zusätzlich als Führung- und Zentriervorrichtung ausgebildet ist und z.B. mittels am Umfang gleichmässig verteilten Rollen, Kugeln (45) oder dgl. verschiebbar am langgestreckten Körper (1) abläuft.

24. Vorrichtung gemäss Anspruch 23, dadurch gekennzeichnet, dass der Mischkopf (60) einer Dosiervorrichtung für Giessmasse am hinteren Flanschteil (2b) oder der Verschiebekraft-Einleitungsvorrichtung (44) lösbar befestigt ist.

Fig.1

_Fig. 2_

Fig. 3

**Europäisches Patentamt**

**EUROPÄISCHER RECHERCHENBERICHT**

EP  82 81 0087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | US-A-2 730 769  (ISENBERG)  * Spalte 3, Zeile 43 - Spalte 4, Zeile 24; Figuren * | 1 | B 29 C   6/04 F 16 L  59/04 |
| D,A | US-A-3 941 531  (PARKER)  * Spalte 2, Zeilen 16-20; Figuren * | 1,18 | |
| D,A | US-A-2 177 221  (MULL)  * Seite 1, rechte Spalte, Zeilen 35-45; Figuren * | 1 | |
| D,A | US-A-3 307 590  (CARLSON)  * Spalte 2, Zeilen 4-14; Figuren * | 1 | |
| D,A | US-A-2 129 680  (DURANT)  * Figuren * | 1 | |

| RECHERCHIERTE SACHGEBIETE (Int. Cl. ³) |
|---|
| F 16 L B 29 D B 28 B B 29 C |

Der vorliegende Recherchenbericht wurde für alle Patentansprüche erstellt.

| Recherchenort | Abschlußdatum der Recherche | Prüfer |
|---|---|---|
| DEN HAAG | 08-06-1982 | HUBEAU M.G. |